# EUROPÄISCHE PATENTSCHRIFT

(11) **EP 2 748 473 B1**
(45) Veröffentlichungstag und Bekanntmachung des Hinweises auf die Patenterteilung: **25.03.2015**
(21) Anmeldenummer: 12740504.1
(22) Anmeldetag: 27.07.2012
(51) Int. Cl.: F16C 11/06

(54) **KUGELGELENK**
BALL JOINT
ARTICULATION À ROTULE

(30) Priorität: 27.08.2011 DE 102011111842
(43) Veröffentlichungstag der Anmeldung: 02.07.2014
(73) Patentinhaber: Audi AG, 85045 Ingolstadt (DE)
(72) Erfinder: KLAUS, Hubert, 84030 Ergolding (DE)
(74) Vertreter: Engelhardt, Harald
(86) Internationale Anmeldenummer: PCT/EP2012/003205
(87) Internationale Veröffentlichungsnummer: WO 2013/029728

(56) Entgegenhaltungen:
- DE-A1- 3 042 498
- DE-A1- 4 419 954
- US-A- 3 524 664
- US-A- 5 073 038
- US-A1- 2005 220 531

## Beschreibung

Die Erfindung betrifft ein Kugelgelenk gemäß der im Oberbegriff des Patentanspruches 1 angegeben Art.

Derartige Kugelgelenke sind hinreichend bekannt und werden insbesondere bei Kraftfahrzeugen im Bereich von Radaufhängung oder Lenkungen eingesetzt.

Ein gattungsgemäßes Kugelgelenk ist in der US 2005/0220531 A sowie auch in der DE 201 21 158 U1 offenbart. Das vorzugsweise für Fahrwerkaufhängungen oder Lenkung von Kraftfahrzeugen vorgesehene Kugelgelenk umfasst ein Gelenkgehäuse und einen Gelenkzapfen, der mittels eines kugelförmigen Gelenkbereichs in einer ein- oder mehrteiligen Lagerschale dreh- und auslenkbar gelagert ist, wobei die Lagerschale ihrerseits verlustsicher im Gelenkgehäuse aufgenommen ist.

In DE 39 15 991 C2 ist ein sogenanntes Versagenselement für eine Spurstange beschrieben, das bei Überschreiten einer Maximalkraft ein anzeigendes Verhalten beinhaltet. Es erweist sich jedoch als nachteilig, dass es sich um ein separates Element handelt, insbesondere unter Berücksichtigung von Bauraum-, Gewichts- und Kostenanforderungen.

Die DE 698 04 504 T2 offenbart ein Kugelgelenk für ein Kraftfahrzeug. Das Kugelzapfengelenk umfasst ein Gehäuse mit einem im Inneren des Gehäuses in Eingriff stehenden Kugelzapfen, der von einem sphärischen Kopf gebildet wird, der fest mit einer Stange verbunden ist, die aus einer Öffnung des Gehäuses hervortritt, ein unteres Lager, das eine untere Lagerfläche definiert, welche den Kopf des Kugelzapfens auf der Seite der Öffnung des Gehäuses umgibt, und ein oberes bewegliches, gegenüberliegendes Lager, das eine obere Lagerfläche definiert, wobei das obere Lager durch eine Feder gegen den Kopf des Kugelzapfens derart vorgespannt ist, dass es sich in einem Maß zum unteren Lager hin verschieben kann, in dem sich der Kopf des Kugelzapfens abnützt, wobei das Gelenk Anzeigemittel für die Abnützung des Kopfes des Kugelzapfens umfasst, die geeignet sind, eine Anzeige der Abnützung diese Kopfes in Abhängigkeit von der Verschiebung des beweglichen oberen Lagers zu geben. Das Kugelzapfengelenk zeichnet sich dadurch aus, dass die Anzeigemittel für die Abnützung ein Kontaktelement umfassen, das mit einem Teil des beweglichen oberen Lagers in Berührung kommen kann, wobei das Kontaktelement im Weg der Translationsverschiebung des oberen Lagers in Richtung zum unteren Lager hin angeordnet ist.

Der vorliegenden Erfindung liegt der Gedanke zugrunde die Funktion des Versagenselements in Zugrichtung in ein ohnehin benötigtes Bauteil zu integrieren, wobei es sich als zielführend erwies, die Funktionsintegration am Kugelgelenk durchzuführen.

Der Erfindung liegt damit die Aufgabe zugrunde, ein Kugelgelenk gemäß der im Oberbegriff des Patentanspruches 1 angegeben Art derart weiter zu bilden, dass bei Überschreiten einer zulässigen Maximalkraft ein Versagen des Kugelgelenks erkennbar ist.

Diese Aufgabe wird durch die kennzeichnenden Merkmale des Anspruchs 1, 2, 4 oder 7 in Verbindung mit seinen Oberbegriffsmerkmalen gelöst.

Die Unteransprüche bilden vorteilhafte Weiterbildungen der Erfindung.

In bekannter Art und Weise umfasst das Kugelgelenk ein Gelenkgehäuse mit einer Gehäuseöffnung und einer im Gelenkgehäuse angeordneten Lagerschale. Ein eine Gelenkkugel und einen Zapfen aufweisender Kugelzapfen ist mit seiner Gelenkkugel drehbar und schwenkbar in der Lagerschale gelagert und über Mittel in axiale Richtung im Gelenkgehäuse gehalten. Der Zapfen des Kugelzapfens ragt durch die Gehäuseöffnung hindurch aus dem Gelenkgehäuse heraus.

Erfindungsgemäß sind die Mittel derart ausgebildet und dimensioniert, dass bei Erreichen einer vorgegebenen Maximalkraft unter Vermeidung einer Separation von Gelenkkugel und Gelenkgehäuse lediglich eine in axiale Richtung gerichtete Bewegung der Gelenkkugel innerhalb des Gelenkgehäuses auftritt.

Durch die erfindungsgemäßen Merkmale ist in vorteilhafter Weise nunmehr sichergesellt, dass bei Erreichen einer vorgegebenen, zulässigen Maximalkraft eine in axiale Richtung gerichtete Bewegung der Gelenkkugel auftritt. Die bei Überschreiten der zulässigen Maximalkraft nun auftretende Bewegung der Gelenkkugel in axiale Richtung ist für den Benutzer leicht erkennbar/detektierbar und dient als ein Indikator für diese Überschreitung. Daneben kann das Gelenk die anliegende Maximalkraft begrenzen und so angrenzende Teile schützen.

Gemäß einer ersten Ausführungsform der Erfindung sind die Mittel über die die Gelenkkugel im Gelenkgehäuse in axiale Richtung gehalten sind, als ein mit dem Gelenkgehäuse fest verbundenes Verschlusselement ausgebildet. Hierbei weist das Verschlusselement in axiale Richtung eine niedrigere Festigkeit auf als das Gelenkgehäuse. Zudem weist das Verschlusselement einen beabstandet zum Gelenkgehäuse angeordneten, in radiale Richtung betrachtet äußeren Ringabschnitt auf. D.h. zwischen Gelenkgehäuse und äußeren Ringabschnitt des Verschlusselements ist ein definierter Spalt ausgebildet. Im Falle einer plastischen Verformung des Verschlusselements aufgrund der wirkenden Maximalkraft, gelangt der äußere Ringabschnitt des Verschlusselements in Anlage zum umgebenden Gelenkgehäuse, d.h. der Spalt zwischen Gelenkgehäuse und äußeren Ringabschnitt des Verschlusselements wird geschlossen. Dies hat die Wirkung, dass nur eine begrenzte plastische Verformung ermöglicht ist, und ein Ausknöpfen der Gelenkkugel und damit eine Separation des Kugelgelenkes ausgeschlossen ist.

Hierbei ist das Verschlusselement vorzugsweise aus duktilem Material auszubilden.

Vorzugsweise ist das Verschlusselement segmentiert ausgebildet. Die segmentierte Ausbildung hat den positiven Effekt, dass auch bei nicht in Gehäuselängsrichtung wirkender Maximalkraft, eine gezielte plastische Deformation des Verschlusselements auftritt.

Gemäß einer weiteren Ausführungsform der Erfindung sind die Mittel wiederum als ein mit dem Gelenkgehäuse fest verbundenes Verschlusselement ausgebildet, wobei nun das Verschlusselement einen in Richtung auf die Gelenkkugel hin umgeformten, bei Maximalkraft zumindest teilweise wieder rückverformbareren Randbereich aufweist. Weiterhin ist das Kugelgelenk und damit das Verschlusselement von einer mit der Gelenkgehäuse form- und/oder kraft- und/oder stoffschlüssig verbundenen Hülse umschlossen, wobei der auf die Gelenkkugel hin ausgerichtete, umgeformte Randbereich des Verschlusselements berührungslos von der Hülse umschlossen ist. D.h. zwischen Hülse und umgeformter Randbereich der Hülse ist ein definierter Spalt vorhanden. Das Verschlusselement ist dabei derart ausgebildet und dimensioniert, dass bei Erreichen der vorgegebenen Maximalkraft eine Rückverformung des umgeformten Randbereichs stattfindet. Aufgrund der Rückverformung führt die Gelenkkugel wiederum eine definierte Bewegung in axiale Richtung aus, die ein Indikator für das Überschreiten der Maximalkraft darstellt. Der Prozess des Rückverformens schließt den Spalt zwischen Randbereich des Verschlusselements und Hülse, so dass ein Separieren des Kugelgelenks ausgeschlossen ist.

In vorteilhafter Weise ist das Verschlusselement aus duktilem Material auszubilden.

Gemäß einer dritten Ausführungsform der Erfindung sind die Mittel über die die Gelenkkugel im Gelenkgehäuse in axiale Richtung gehalten sind, als ein in Richtung auf die Gelenkkugel hin umgeformter, bei Maximalkraft zumindest teilweise rückverformbarer Gehäusebereich des Gelenkgehäuses ausgebildet. Zudem ist das Gelenkgehäuse von einer mit dem Gelenkgehäuse form- und/oder kraft- und/oder stoffschlüssig verbundenen Hülse umschlossen. Im Bereich des umgeformten Gehäusebereichs umschließt die Hülse berührungslos das Gelenkgehäuse, d.h. zwischen Hülse und umgeformten Gehäusebereich ist ein definierter Spalt ausgebildet. Entsprechend zu der zweiten Ausführungsform, tritt auch hier bei Auftreten der Maximalkraft ein Aufweiten, d.h. ein teilweises Rückverformen des während der Montage des Kugelgelenks umgeformten Gehäusebereichs auf. Diese Rückverformung bedingt eine axiale Bewegung der Gelenkkugel innerhalb des Gelenkgehäuses, die detektierbar ist und wiederum als Indikator für das Überschreiten der Maximalkraft dient. Aufgrund des sich bei der Rückverformung schließenden Spaltes zwischen Hülse und Gelenkgehäuse ist eine Gelenkseparation ausgeschlossen.

Vorzugsweise ist die Hülse mittels eines durch Kaltumformen umgeformten Hülsenabschnitts mit dem Gelenkgehäuse verbunden. Die Verbindung mittels einer Kaltumformung erweist sich als vorteilhaft, da hierdurch keine Spannungen, wie z. B. Wärmespannungen bei einer Schweißverbindung, in das Gelenk eingeleitet werden. D.h. das Fügen der Hülse und des Gelenkgehäuses mittels Kaltumformen reduziert die Gefahr der Beeinflussung der Verspannsituation des Gelenks.

Um eine ausreichende Festigkeit zwischen Hülse und Gelenkgehäuse zu gewährleisten, ist vorzugsweise das Gelenkgehäuse mit einer umlaufenden Materialausnehmung versehen, in die der umgeformte Hülsenabschnitt eingreift.

Gemäß einer vierten Ausführungsform der Erfindung sind die Mittel über die die Gelenkkugel im Gelenkgehäuse in axiale Richtung gehalten sind, wiederum als ein einstückiges Verschlusselement ausgebildet. Hierbei weist das Verschlusselement einen Befestigungsabschnitt auf, der über eine bei Maximalkraft versagende Sollbruchstelle mit dem Verschlusselement verbunden ist und über den das Verschlusselement fest mit dem Gelenkgehäuse verbunden ist. Zudem weist das Verschlusselement einen als Auffangelement ausgebildeten Bereich auf, der in eine korrespondierend im Gelenkgehäuse vorgesehene Ausnehmung eingreift. Hierbei ist zwischen dem fangarmähnlichen Auffangelement und der Ausnehmung im Gelenkgehäuse ein in axiale Richtung ausgerichteter Spalt ausgebildet. Bei Erreichen der Maximalkraft und des damit verbundenen Versagens der Sollbruchstelle führt die Gelenkkugel eine definierte Bewegung in axiale Richtung aus, die wiederum ein Indikator für das Überschreiten der Maximalkraft darstellt. Über den formschlüssigen Eingriff des Auffangelements in die Ausnehmung wird die axiale Bewegung definiert gestoppt und die Separation verhindert. Das Auffangelement kann beispielsweise bei der Montage über eine plastische Verformung des Verschlussrings erzeugt werden.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

Die Erfindung wird im Folgenden anhand der in den Zeichnungen dargestellten Ausführungsbeispiele näher beschrieben.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:
- Fig. 1: eine Schnittdarstellung einer ersten Ausführungsform des erfindungsgemäßen Kugelgelenks;
- Fig. 2: das Kugelgelenk aus Fig. 1 nach Belastung des Gelenks mit der zulässigen Maximalkraft;
- Fig. 3: eine weitere Ausführungsform des erfindungsgemäßen Kugelgelenks;
- Fig. 4: den mit "X" bezeichneten Ausschnitt aus Fig. 3 nach Belastung des Gelenks mit der zulässigen Maximalkraft;
- Fig. 5: eine weitere Ausführungsform des erfindungsgemäßen Kugelgelenks, und
- Fig. 6: das Kugelgelenk aus Fig. 5 nach Belastung des Gelenks mit der zulässigen Maximalkraft.

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

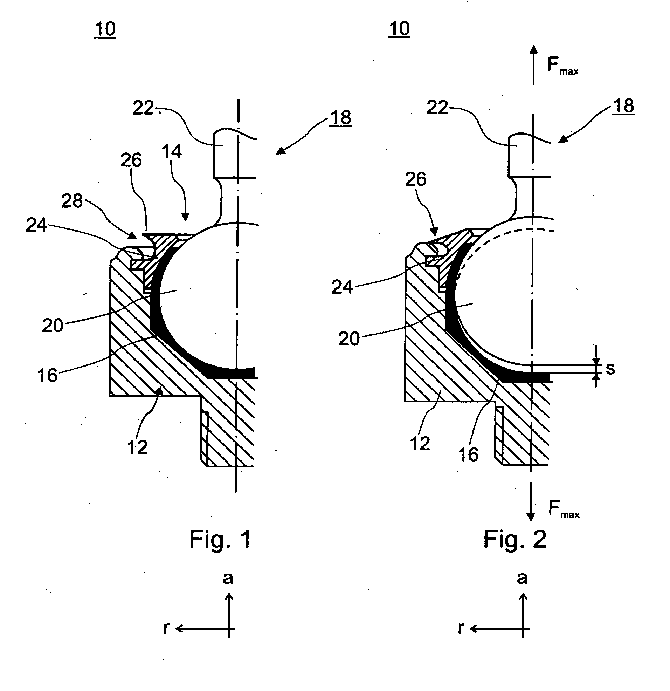

Fig. 1 zeigt in Schnittdarstellung ein insgesamt mit der Bezugsziffer 10 bezeichnetes Kugelgelenk.

Das Kugelgelenk 10 umfasst in bekannter Art und Weise ein Gelenkgehäuse 12 mit einer Gehäuseöffnung 14 und einer im Gelenkgehäuse angeordneten Lagerschale 16.

Ein insgesamt mit der Bezugsziffer 18 bezeichneter Kugelzapfen ist mit seiner Gelenkkugel 20 dreh- und schwenkbar in der Lagerschale 16 gelagert und ragt mit seinem Zapfen 22 aus der Gehäuseöffnung 14 hinaus.

Gemäß der in Fig. 1 dargestellten Ausführungsform ist die Gelenkkugel 20 über ein mit dem Gelenkgehäuse fest verbundenes Verschlusselement, hier in Form eines Verschlussringes 24, in axiale Richtung a im Gelenkgehäuse 12 gehalten.

Wie Fig. 1 zu entnehmen ist, weist der Verschlussring 24 einen beabstandet zum Gelenkgehäuse 12 angeordneten, in radiale Richtung r betrachtet äußeren Ringabschnitt 26 auf. D.h. zwischen Gelenkgehäuse 12 und Verschlussring 24 ist ein Spalt 28 ausgebildet.

Zudem weist der Verschlussring 24 in axiale Richtung a eine niedrigere Festigkeit auf als das umgebende Gelenkgehäuse 12.

Der positive Effekt der erfindungsgemäßen Ausbildung des Kugelgelenks 10 ist aus Fig. 2 ersichtlich:
Der Verschlussring 24 ist derart dimensioniert, dass bei einer vorher bestimmten, in axiale Richtung a wirkenden Maximalkraft F, eine definierte plastische Verformung des Verschlussrings 24 einsetzt und somit die Gelenkkugel 20 eine definierte Bewegung s in axiale Richtung ausführt. Die Bewegung s ist von außen leicht detektierbar und dient als Indikator für das Überschreiten einer Maximalkraft.

Die plastische Verformung des Verschlussrings 24 führt dazu, dass der Ringabschnitt 26 in Anlage zum Gelenkgehäuse 12 kommt, d.h. dass der Spalt 28 geschlossen wird. Hierdurch ist eine Separation des Kugelgelenks 10 ausgeschlossen.

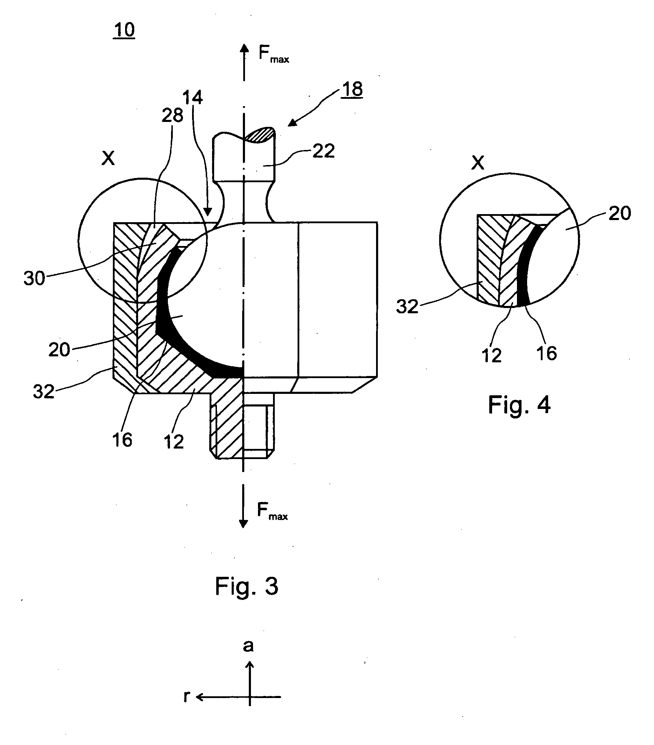

Das in Fig. 3 dargestellte Kugelgelenk 10 entspricht im Wesentlichen dem in Fig. 1 dargestellten. Im Gegensatz zu Fig. 1 ist nunmehr die Gelenkkugel 20 über einen in Richtung auf die Gelenkkugel 20 hin umgeformten Gehäusebereich 30 in axiale Richtung a im Gelenkgehäuse 12 gehalten. Zudem ist das Gelenkgehäuse. 12 von einer Hülse 32 umschlossen. Im Bereich des umgeformten Gehäusebereichs 32 ist das Gelenkgehäuse 12 berührungslos von der Hülse 32 umfasst, so dass zwischen Hülse 32 und umgeformtem Gehäusebereich 30 ein definierter Spalt 28 ausgebildet ist.

Die Hülse 32 ist mittels eines geeigneten Verfahrens ohne Wärmeintrag mit dem Gelenkgehäuse 12 fest verbunden.

Wie aus Fig. 4 ersichtlich, findet bei einer axialen Bewegung der Gelenkkugel 20 in axiale Richtung eine Rückverformung des umgeformten Gehäusebereichs 32 statt. Diese axiale Bewegung der Gelenkkugel 20 dient wieder als Indikator für ein das Überschreiten einer Maximalkraft.

Aufgrund der umgebenden Hülse 32 kann die Rückformung nur solange fortschreiten, bis der Spalt 28 geschlossen ist, so dass eine Separation des Kugelgelenks 10 ausgeschlossen ist.

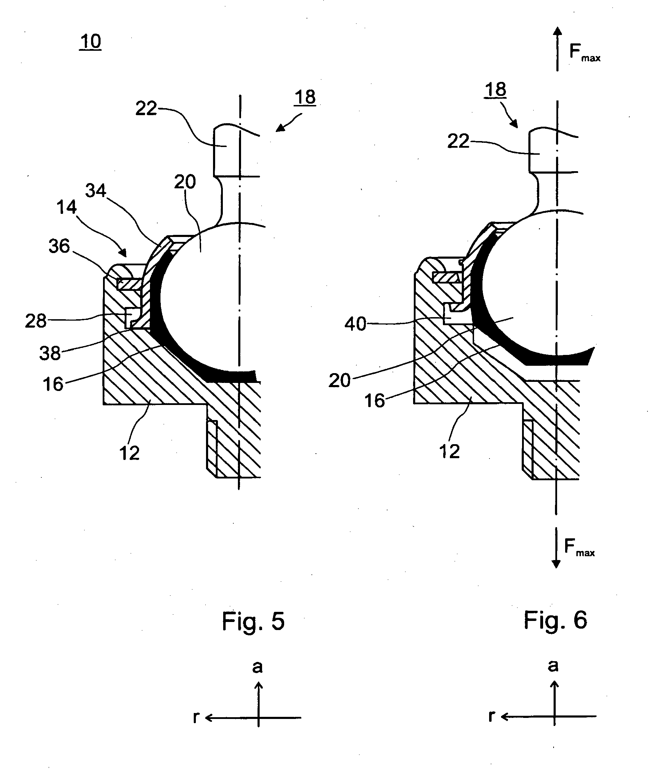

Bei der in Fig. 5 und 6 dargestellten Ausführungsform ist die Gelenkkugel 20 wiederum mittels eines Verschlusselements 34 in axiale Richtung a im Gelenkgehäuse 12 gehalten ist.

Wie Fig. 5 zu entnehmen ist, weist das einstückig ausgebildete Verschlusselement 34 einen Befestigungsabschnitt 36 auf. Über den Befestigungsabschnitt 36 ist das Verschlusselement 34 fest mit dem Gelenkgehäuse 12 verbunden. Der Befestigungsabschnitt 36 ist hierbei über eine bei Maximalkraft versagende Sollbruchstelle mit dem Verschlusselement 34 verbunden.

Zudem weist, wie Fig. 5 weiter zu entnehmen ist, das Verschlusselement ein fangarmartig ausgebildetes Auffangelement 38 auf. Das Auffangelement 38 greift in eine im Gelenkgehäuse 12 vorgesehene Ausnehmung 40 ein. Zwischen Auffangelement 38 und Ausnehmung 40 ist ein in axiale Richtung a ausgerichteter Spalt 28 ausgebildet.

Bei Überschreiten der Maximalkraft und Versagen der Sollbruchstelle, vgl. Fig. 6, findet eine axiale Bewegung der Gelenkkugel 20 in axiale Richtung a statt, die als Indikator für das Überschreiten der Maximalkraft dient.

Die axiale Bewegung der Gelenkkugel 20 kann nur so weit fortschreiten, bis der Spalt 28 zwischen Auffangelement 38 und Ausnehmung 40 geschlossen ist. Durch die fangarmähnliche Ausbildung wird eine Separation des Kugelgelenks 10 erfolgreich verhindert.

### Bezugszeichenliste

- 10: Kugelgelenk
- 12: Gelenkgehäuse
- 14: Gehäuseöffnung
- 16: Lagerschale
- 18: Kugelzapfen
- 20: Gelenkkugel
- 22: Zapfen
- 24: Verschlussring
- 26: Ringabschnitt
- 28: Spalt
- 30: umgeformter Gehäusebereich
- 32: Hülse
- 34: Verschlusselement
- 36: Befestigungsabschnitt
- 38: Auffangelement
- 40: Ausnehmung

- a: axiale Richtung
- r: radiale Richtung
- s: Weg
- F: Kraft

## Patentansprüche

1. Kugelgelenk (10), umfassend
- ein Gelenkgehäuse (12) mit einer Gehäuseöffnung (14);
- eine im Gelenkgehäuse (12) angeordnete Lagerschale (16);
- einen eine Gelenkkugel (20) und einen Zapfen (22) aufweisenden Kugelzapfen (18), der mit seiner Gelenkkugel (20) drehbar und schwenkbar in der Lagerschale (16) gelagert ist und mit seinem Zapfen (18) durch die Gehäuseöffnung (14) hindurch aus dem Gelenkgehäuse (12) herausragt, sowie
- Mittel (24, 30, 34), über die die Gelenkkugel (20) des Kugelzapfens (18) in axiale Richtung (a) im Gelenkgehäuse (12) gehalten ist, **dadurch gekennzeichnet,** dass die Mittel als ein mit dem Gelenkgehäuse (12) fest verbundenes Verschlusselement (24) ausgebildet sind, das in axiale Richtung eine geringere Festigkeit als das Gelenkgehäuse (12) aufweist, wobei das Verschlusselement (24) einen beabstandet zum Gelenkgehäuse (12) angeordneten, in radiale Richtung (r) betrachtet äußeren Ringabschnitt (26) aufweist, so dass zwischen dem äußeren Ringabschnitt (26) des Verschlusselements (24) und Gelenkgehäuse (12) ein in axiale Richtung (a) ausgerichteter Spalt (28) ausgebildet ist, der nach Überschreiten der Maximalkraft eine in axiale Richtung (a) gerichtete Bewegung der Gelenkkugel (20) ermöglicht und nach Schließung die Bewegung kontrolliert begrenzt, so dass die Separation verhindert ist.

2. Kugelgelenk nach dem Oberbegriff des Anspruches 1, **dadurch gekennzeichnet, dass** die Mittel als ein mit dem Gelenkgehäuse (12) fest verbundenes Verschlusselement ausgebildet sind, wobei das Verschlusselement einen in Richtung auf die Gelenkkugel (20) hin umgeformten, bei Maximalkraft zumindest teilweise rückverformbaren Randbereich aufweist und das Gelenkgehäuse (12) von einer mit dem Gelenkgehäuse (12) form- und/oder kraft- und/oder stoffschlüssig verbundenen Hülse (32) umschlossen ist, wobei der auf die Gelenkkugel (20) hin ausgerichtete, umgeformte Randbereich des Verschlusselements berührungslos von der Hülse (32) umschlossen ist, so dass zwischen dem rückverformbaren Randbereich des Verschlusselements und der Hülse (32) ein in axiale Richtung (a) ausgerichteter Spalt (28) ausgebildet ist, der nach Überschreiten der Maximalkraft eine in axiale Richtung (a) gerichtete Bewegung der Gelenkkugel (20) ermöglicht und nach Schließung die Bewegung kontrolliert begrenzt, so dass die Separation verhindert ist.

3. Kugelgelenk nach Anspruch 1 oder 2, **dadurch gekennzeichnet, dass** das Verschlusselement (24, 34) segmentiert ausgebildet ist.

4. Kugelgelenk nach dem Oberbegriff des Anspruches 1, **dadurch gekennzeichnet, dass** die Mittel als ein in Richtung auf die Gelenkkugel (20) hin umgeformter, bei Maximalkraft zumindest teilweise rückverformbarer Gehäusebereich (30) des Gelenkgehäuses (12) ausgebildet sind, wobei das Gelenkgehäuse (12) von einer mit dem Gelenkgehäuse (12) form- und/oder kraft- und/oder stoffschlüssig verbundenen Hülse (32) umschlossen ist, und das Gelenkgehäuse (12) im Bereich des umgeformten Gehäusebereichs (30) berührungslos von der Hülse (32) umschlossen ist, so dass zwischen dem umgeformten Gehäusebereich (30) und der Hülse (32) ein in axiale Richtung (a) ausgerichteter Spalt (28) ausgebildet ist, der nach Überschreiten der Maximalkraft eine in axiale Richtung (a) gerichtete Bewegung der Gelenkkugel (20) ermöglicht und nach Schließung die Bewegung kontrolliert begrenzt, so dass die Separation verhindert ist.

5. Kugelgelenk nach Anspruch 2 oder 4, **dadurch gekennzeichnet, dass** die Hülse (32) mittels eines durch Kaltumformen umgeformten Hülsenabschnitts mit dem Gelenkgehäuse (12) verbunden ist.

6. Kugelgelenk nach Anspruch 5, **dadurch gekennzeichnet, dass** das Gelenkgehäuse (12) eine umlaufende Materialausnehmung aufweist, in die der umgeformte Hülsenabschnitt eingreift.

7. Kugelgelenk nach dem Oberbegriff des Anspruches 1, **dadurch gekennzeichnet, dass** die Mittel als ein mit dem Gelenkgehäuse (12) fest verbundenes Verschlusselement (34) ausgebildet sind, wobei das Verschlusselement (34) einen Befestigungsabschnitt (36) aufweist, der über eine bei Maximalkraft versagende Sollbruchstelle am Verschlusselement (34) angeordnet ist, und über den das Verschlusselement (34) fest mit dem Gelenkgehäuse (12) verbunden ist, und wobei das Verschlusselement (34) einen als Auffangelement ausgebildeten Bereich (38) aufweist, der in eine korrespondierende Ausnehmung (40) im Gelenkgehäuse (12) eingreift, wobei zwischen der Ausnehmung (40) im Gelenkgehäuse (12) und dem als Auffangelement ausgebildeten Bereich (38) des Verschlusselements (34) ein in axiale Richtung (a) ausgerichteter Spalt (28) ausgebildet ist, der nach Überschreiten der Maximalkraft und Versagen der Sollbruchstelle eine in axiale Richtung (a) gerichtete Bewegung der Gelenkkugel (20) ermöglicht und nach Schließung die Bewegung kontrolliert begrenzt, so dass die Separation verhindert ist.

## Claims

1. Ball joint (10), comprising
- a joint housing (12) having a housing opening (14);
- a bearing shell (16) arranged in the joint housing (12);
- a ball pin (18), comprising a spherical joint part (20) and a pin (22), which by means of the spherical joint part (20) thereof is rotatably and pivotally mounted in the bearing shell (16) and the pin (18) of which protrudes through the housing opening (14) and out of the joint housing (12), and comprising
- means (24, 30, 34) by means of which the spherical joint part (20) of the ball pin (18) is held in the joint housing (12) in the axial direction (a), **characterised in that** the means is formed as a closure element (24) which is rigidly connected to the joint housing (12) and, in the axial direction, has a lower degree of strength than the joint housing (12), the closure element (24) comprising an external annular portion (26) which, when viewed in the radial direction (r), is at a spacing from the joint housing (12), so that a gap (28), aligned in the axial direction (a), is formed between the external annular portion (26) of the closure element (24) and the joint housing (12), which gap facilitates movement of the spherical joint part (20) in the axial direction (a) once the maximum force has been exceeded, and limits the movement in a controlled manner following a closure procedure, so that separation is prevented.

2. Ball joint according to the preamble of claim 1, **characterised in that** the means is formed as a closure element which is rigidly connected to the joint housing (12), the closure element comprising an edge region which is shaped towards the spherical joint part (20) and can revert to its original shape under maximum force, at least in part, and the joint housing (12) being surrounded by a sleeve (32) which is connected to the joint housing (12) in an interlocking and/or force-fitting and/or integrally bonded manner, the edge region, which is shaped towards the spherical joint part (20), of the closure element being surrounded by the sleeve (32) in a contact-free manner, so that a gap (28), aligned in the axial direction (a), is formed between the edge region, which can revert to its original shape, of the closure element and the sleeve (32), which gap facilitates movement of the spherical joint part (20) in the axial direction (a) once the maximum force has been exceeded, and limits the movement in a controlled manner following a closure procedure, so that separation is prevented.

3. Ball joint according to either claim 1 or claim 2, **characterised in that** the closure element (24, 34) is formed so as to be segmented.

4. Ball joint according to the preamble of claim 1, **characterised in that** the means is formed as a housing region (30), which is shaped towards the ball joint (20) and can revert to its original shape under maximum force, at least in part, of the joint housing (12), the joint housing (12) being surrounded by a sleeve (32) which is connected to the joint housing (12) in an interlocking and/or force-fitting and/or integrally bonded manner, and the joint housing (12) being surrounded by said sleeve (32) in the region of the shaped housing region (30) in a contact-free manner, so that a gap (28), aligned in the axial direction (a), is formed between the shaped housing region (30) and the sleeve (32), which gap facilitates movement of the spherical joint part (20) in the axial direction (a) once the maximum force has been exceeded, and limits the movement in a controlled manner following a closure procedure, so that separation is prevented.

5. Ball joint according to either claim 2 or claim 4, **characterised in that** the sleeve (32) is connected to the joint housing (12) by means of a cold-formed sleeve portion.

6. Ball joint according to claim 5, **characterised in that** the joint housing (12) comprises a peripheral material recess in which the shaped sleeve portion engages.

7. Ball joint according to the preamble of claim 1, **characterised in that** the means is formed as a closure element (34) which is rigidly connected to the joint housing (12), the closure element (34) comprising a fixing portion (36) which is arranged on the closure element (34) above a predetermined breaking point, which is intended to break under maximum force, and the closure element (34) being rigidly connected to the joint housing (12) above said fixing portion, and the closure element (34) comprising a region (38) formed as a catch element which engages in a corresponding recess (40) in the joint housing (12), a gap (28), oriented in the axial direction (a), being formed between the recess (40) in the joint housing (12) and the region (38) of the closure element (34) formed as a catch element, which gap facilitates movement of the spherical joint part (20) in the axial direction (a) once the maximum force has been exceeded and the predetermined breaking point has broken, and limits the movement in a controlled manner following a closure procedure, so that separation is prevented.

## Revendications

1. Articulation à rotule (10), comprenant :
- un boîtier d'articulation (12) avec une ouverture de boîtier (14) ;
- une coquille de coussinet (16) aménagée dans le boîtier d'articulation (12) ;
- un pivot sphérique (18) présentant une rotule d'articulation (20) et un pivot (22), qui est monté de manière à pouvoir tourner et pivoter avec sa rotule d'articulation (20) dans la coquille de coussinet (16) et dépasse par son pivot (18) du boîtier d'articulation (12) à travers l'ouverture de boîtier (14), ainsi que :
- des moyens (24, 30, 34), par lesquels la rotule d'articulation (20) du pivot sphérique (18) est maintenue dans le boîtier d'articulation dans la direction axiale (a), **caractérisée en ce que** les moyens se présentent sous la forme d'un élément de fermeture (24) fixé solidement au boîtier d'articulation (12), lequel élément de fermeture présente dans la direction axiale une moindre solidité que le boîtier d'articulation (12), dans laquelle l'élément de fermeture (24) présente une section annulaire (26), externe en la considérant dans la direction radiale (r), aménagée à distance du boîtier d'articulation (12) de sorte que soit formée entre la section annulaire externe (26) de l'élément de fermeture (24) et le boîtier d'articulation (12) une fente (28) orientée dans la direction axiale (a) qui permet, après dépassement de la force maximale, un déplacement de la rotule d'articulation (20) dirigé dans la direction axiale (a) et limite, après fermeture, le déplacement de manière contrôlée de sorte que la séparation soit empêchée.

2. Articulation à rotule selon le préambule de la revendication 1, **caractérisée en ce que** les moyens sont conçus sous la forme d'un élément de fermeture solidement fixé au boîtier d'articulation (12), dans laquelle l'élément de fermeture présente une zone de bord déformée dans la direction de la rotule d'articulation (20) et au moins en partie re-déformable sous l'effet d'une force maximale et le boîtier d'articulation (12) est confiné par une douille (32) reliée au boîtier d'articulation (12) par voie mécanique et/ou par adhérence et/ou en mode venu de matière, dans laquelle la zone de bord déformée de l'élément de fermeture tournée vers la rotule d'articulation (20) est confinée sans contact par la douille (32) de sorte que soit formée entre la zone de bord re-déformable de l'élément de fermeture et la douille (32) une fente (28) dirigée dans la direction axiale (a), qui permet, après dépassement de la force maximale, un déplacement de la rotule d'articulation (20) dirigé dans la direction axiale (a) et limite, après fermeture, le déplacement de manière contrôlée de sorte que la séparation soit empêchée.

3. Articulation à rotule selon la revendication 1 ou la revendication 2, **caractérisée en ce que** l'élément de fermeture (24, 34) est conçu sous forme segmentée.

4. Articulation à rotule selon le préambule de la revendication 1, **caractérisée en ce que** les moyens sont conçus sous la forme d'une zone de boîtier (30) du boîtier d'articulation (12) déformée dans la direction de la rotule d'articulation (20) et au moins en partie re-déformable sous l'effet d'une force maximale, dans laquelle le boîtier d'articulation (12) est confiné par une douille (32) reliée au boîtier d'articulation (12) par voie mécanique et/ou par adhérence et/ou en mode venu de matière et la zone de boîtier (12) est confinée dans la zone du boîtier déformé (30) sans contact par la douille (32) de sorte que soit formée entre la zone de boîtier déformée (30) et la douille (32) une fente (28) dirigée dans la direction axiale (a), qui permet, après dépassement de la force maximale, un déplacement de la rotule d'articulation (20) dirigé dans la direction axiale (a) et limite, après fermeture, le déplacement de manière contrôlée de sorte que la séparation soit empêchée.

5. Articulation à rotule selon la revendication 2 ou la revendication 4, **caractérisée en ce que** la douille (32) est reliée au boîtier d'articulation (12) au moyen d'une section de douille déformée par fluage à froid.

6. Articulation à rotule selon la revendication 5, **caractérisée en ce que** le boîtier d'articulation (12) présente une cavité matérielle périphérique dans laquelle s'engage la section de douille déformée.

7. Articulation à rotule selon le préambule de la revendication 1, **caractérisée en ce que** les moyens se présentent sous la forme d'un élément de fermeture (34) fixé solidement au boîtier d'articulation (12), dans laquelle l'élément de fermeture (34) présente une section de fixation (36), qui est aménagée sur l'élément de fermeture (34) via un point de rupture théorique qui s'avère défaillant sous l'action d'une force maximale, et via lequel l'élément de fermeture (34) est lié solidement au boîtier d'articulation (12), et dans laquelle l'élément de fermeture (34) présente une zone (38) conformé en élément de prise, qui s'engage dans une cavité correspondante (40) du boîtier d'articulation (12), dans laquelle il est formé entre la cavité (40) du boîtier d'articulation (12) et la zone (38) de l'élément de fermeture (34) conformée en élément de prise une fente (28) orientée dans la direction axiale (a), laquelle fente permet, après dépassement de la force maximale et défaillance du point de rupture théorique, un déplacement de la rotule d'articulation (20) dirigée dans la direction axiale (a) et limite, après fermeture, le déplacement de manière contrôlée de sorte que la séparation soit empêchée.
